# NEUE EUROPÄISCHE PATENTSCHRIFT

(11) **EP 0 840 246 B2**
(45) Veröffentlichungstag und Bekanntmachung des Hinweises auf die Entscheidung über den Einspruch: **16.03.2011**
(45) Hinweis auf die Patenterteilung: 17.09.2003
(21) Anmeldenummer: 97119047.5
(22) Anmeldetag: 31.10.1997
(51) Int. Cl.: G06K 7/00

(54) **SIM-Kartenkontaktiervorrichtung**
Contact device for SIM-cards
Dispositif de contact pour cartes SIM

(30) Priorität: 05.11.1996 DE 19645584; 08.08.1997 DE 19734424
(43) Veröffentlichungstag der Anmeldung: 06.05.1998
(73) Patentinhaber: Amphenol-Tuchel Electronics GmbH, 74080 Heilbronn (DE)
(72) Erfinder: Braun, Gerhard, 74626 Bitzfeld (DE)
(74) Vertreter: Wagner, Karl H.

(56) Entgegenhaltungen:
- EP-A- 0 131 410
- DE-A- 3 642 424
- FR-A- 2 696 031
- JP-B2- 3 236 753
- US-B- 4 820 186

## Beschreibung

Die Erfindung bezieht sich auf eine Kontaktiervorrichtung allgemein für Chipkarten und speziell für SIM-Karten. Eine solche Kontaktiervorrichtung kann kurz als Kartenleser speziell als SIM-Kartenleser bezeichnet werden.

Beispielsweise aus der WO 91/15101 ist eine Kontaktiereinrichtung insbesondere für ein SIM (Subscriber Identity Module) bekannt. Bei dieser Kontaktiereinrichtung ist ein als Kontaktträger ausgebildetes Gehäuse vorgesehen, und das SIM wird durch einen Deckel oder ein Gehäuseteil bei eingesetztem SIM gegen im Kontaktträger angeordnete Kontaktelemente gedrückt. Lager- oder Anlenkmittel dienen zur Lagerung des Deckels am Kontaktträger.

Die EP-A-0 131 410 zeigt einen Chipkarteneser mit einem Kontaktträger,mit einem Deckel und mit Lagervorrichtungen am Kontaktträger und am Deckel zur Ermöglichung einer Schwenkbewegung zwischen Deckel und Kontaktträger. Die Lagervorrichtungen weisen einen statischen Lagerteil am Kontaktträger und einer drehbaren Lagerteil am Deckel auf und sind außerhalb einer IC-Karte angeordnet Die FR-2696031 zeigt ebenso wie die DE-36 42 424 einen Chipkartenleser bzw. IC-Kartenleser bei denen breitgreifende Anordnungen für die Lagervorrichtungen des Deckels vorgesehen sind.

Die JP 824 175 4 zeigt einen Kartenleser, der folgenden aufweist :
einen Kontaktelemente aufweisenden Kontaktträger ,
mit einen Deckel zur Aufnahme einer zwei beabstandete Längsseitenkanten und zwei beabstandete Vorder- und Hinterkanten aufweisenden IC Karte ,
zwei Lagervorrichtungen am Kontaktträger und Deckel zur Ermöglichung einer Schwenkbewegung zwischen Deckel und Kontaktträger, wobei jede der Lagervorrichtungen einen statischen Lagerteil am Kontaktträger und
einen drehbaren Lagerteil am Deckel aufweist, und
wobei beide Lagervorrichtungen innerhalb der Kartenbreite der im IC Kartenleser einsetzbaren IC Karte liegen.

SIM-Kartenleser werden häufig in Telefongeräten und zwar in sogenannten Handys verwendet, die möglichst klein gebaut werden sollen.

Erfindungsgemäß soll insbesondere ein eine geringe Breite und Bauhöhe besitzender SIM-Kartenleser vorgesehen werden.

Erfindungsgemäß wird dies durch die Merkmale nach Anspruch 1 ermöglich.

Die Bauhöhe des SIM-Kartenlesers wird erfindungsgemäß insbesondere dadurch verringert, daß man die die Lagerstellen vorsehenden Lagervorrichtungen in ihrer Höhe begrenzt, und zwar insbesondere durch Verwendung einer oder mehrerer Steuerkurven, für die Führung der SIM-Karte.

Während beim genannten Stand der Technik der Klapp-Schiebedeckel wegen der seitlich an den Kartenlängsseiten positionierten Lagerstellen so geschlossen werden kann, daß die Karte eine reine Dreh- oder Schwenkbewegung (praktisch ohne eine Verschiebung der SIM-Karte innerhalb des Deckels) beim Verriegeln ausführt, ermöglicht die erfindungsgemäß vorgesehene, vorzugsweise an den Lagervorrichtungen ausgebildete Steuerkurve, daß sich die Karte beim Verschwenken des Deckels in dessen Schließ- oder Kontaktposition entlang dieser zum Teil relativ flachen Steuerkurve in eine im Kontaktträger ausgebildete Kontaktaufnahme bewegt, und zwar unter Verschiebung der SIM-Karte relativ zum Deckel.

Durch die erfindungsgemäßen Maßnahmen werden günstige Außenabmessungen (in mm) von beispielsweise 30 x 17,2 x 2,5 realisiert, wobei beim Zuklappen des Deckels die Kartenkontakte der SIM-Karte in der Kontaktfeldmitte der Kontaktelemente auftreffen, was die bereits erwähnte Steuerkurve sicher stellt. Das heißt, durch die Steuerkurve wird die SIM-Karte beim Zuklappen des Deckels so zwangsgeführt, daß die Kartenkontakte in der Kontaktfeldmitte der Kontaktelemente auftreffen. Beim Schließen des Deckels führt also die SIM-Karte eine durch die Steuerkurve bestimmte relative Bewegung zum Deckel aus.

Erfindungsgemäß wird ein SIM-Kartenleser vorgesehen, der einen flachen eine Kartenaufnahme bildenden Kontaktträger aufweist, an dem ein Deckel schwenkbar mittels zweier Lagervorrichtungen gelagert ist. Die beiden Lagervorrichtungen sind im wesentlichen innerhalb der Kartenbreite angeordnet. Vorzugsweise sind die Lagervorrichtungen innerhalb der Kartenbreite liegend in Richtung der Längserstreckung des SIM-Kartenlesers nach hinten versetzt. Mit dem Ausdruck "nach hinten" wird dabei beschrieben, daß die Lagervorrichtungen gegenüber einer von der Kartenaufnahme gebildeten Anschlagstelle für die hintere Kartenkante versetzt sind, wobei zu bemerken ist, daß die SIM-Karte neben zwei beabstandeten Längsseitenkanten zwei ebenfalls beabstandete kürzere Kartenkanten aufweist, nämlich eine Vorderkante und eine Hinterkante, wobei die Vorderkante eine Abschrägung besitzt.

Weitere Vorteile, Ziele und Einzelheiten der Erfindung ergeben sich aus der Beschreibung von Ausführungsbeispielen anhand der Zeichnung; in der Zeichnung zeigt:
- Fig. 1:: eine Seitenansicht eines gemäß der Erfindung ausgebildeten SIM-Kartenlesers bestehend aus Kontaktträger und Deckel, wobei sich der Deckel in einer Karteneinsetzposition befindet;
- Fig. 2:: eine Seitenansicht des SIM-Kartenlesers der Fig. 1, wobei sich der Deckel in seiner Verriegelungsposition befindet;
- Fig. 3:: eine Draufsicht auf den SIM-Kartenleser gemäß Fig. 2;
- Fig. 4:: eine Draufsicht auf den Kontaktträger des SIM-Kartenlesers der Fig. 1 bis 3;
- Fig. 5:: schematisch eine Einzelheit des SIM-Kartenlesers der Fig. 1, wobei dargestellt ist, daß die SIM-Karte bei der Schwenkbewegung des Deckels aus seiner Karteneinsetzposition in seine Kar-Kartenschließ- oder Kontaktposition eine Relativbewegung bezüglich des Deckels ausführt, die durch eine Steuerkurve bewirkt wird;
- Fig. 6:: schematisch eine Einzelheit eines weiteren Ausführungsbeispiels eines SIM-Kartenlesers.

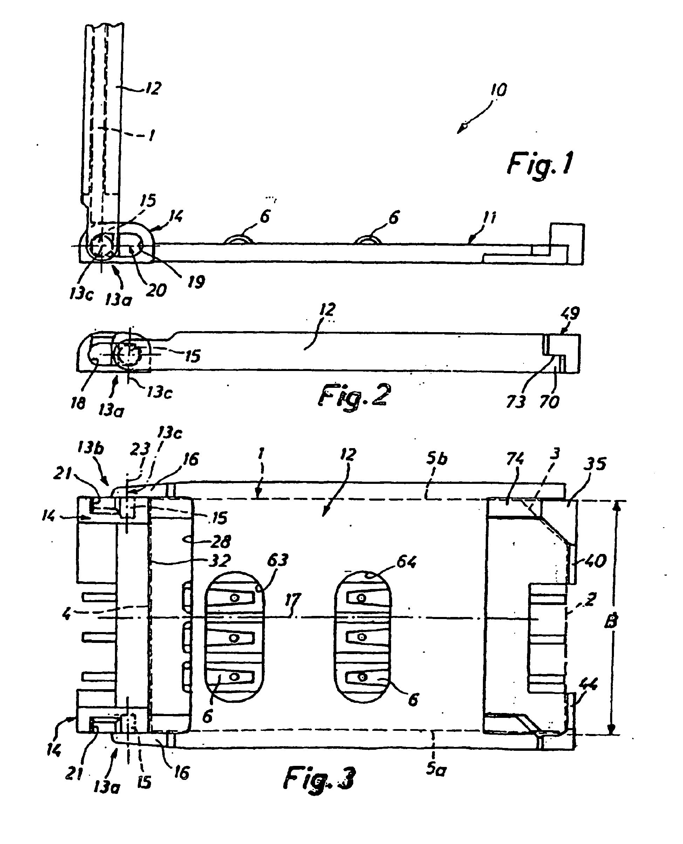

Im folgenden wird anhand der Fig. 1 bis 5 ein Ausführungsbeispiel der Erfindung beschrieben. Die Erfindung wird anhand eines SIM-Kartenlesers beschrieben, ist aber auch bei einem regulären Chipkartenleser einsetzbar.

Der erfindungsgemäße SIM-Kartenleser 10 weist einen Rahmen oder Kontaktträger 11 auf, in dem mehrere Kontaktelemente 6 angeordnet, beispielsweise eingespritzt, sind.

Am Kontaktträger 11 ist ein Deckel 12 durch Lagermittel drehbar gelagert. Der Deckel 12 dient zur Aufnahme einer SIM-Karte 1. Zu diesem Zweck sind im Deckel einen (gepunktet dargestellten) Schacht bildende Schienen oder Kartenführungsteile vorgesehen. Deckel 12 und Kontaktträger 11 sind vorzugsweise jeweils einstückig aus Kunststoff hergestellt. Es ist auch möglich, den Deckel aus Metall zu formen.

### Die SIM-Karte.

Die SIM-Karte 1 ist in den Zeichnungen gestrichelt dargestellt. Die SIM-Karte 1 weist, vgl. Fig. 3, eine Vorderkante 2 mit einer Abschrägung 3 sowie eine Hinterkante 4 auf. Ferner sind Seitenkanten 5a und 5b vorgesehen. Die SIM-Karte besitzt in einem Kontaktfeld angeordnete nicht gezeigte Kartenkontakte zur Kontaktgabe mit den ebenfalls in einem Kontaktfeld angeordneten Kontaktelementen 6.

### Die Lagermittel.

Im dargestellten Ausführungsbeispiel sind die Lagermittel durch zwei beabstandete Lagervorrichtungen (oder Lagerstellen) 13a und 13b (vgl. Fig. 2) gebildet. Die beiden Lagervorrichtungen 13a und 13b sind spiegelbildlich ausgebildet, so daß im folgenden lediglich die Lagervorrichtung 13a beschrieben wird. Die Lagervorrichtungen 13a, 13b gestatten zum einen ein Verschwenken des Deckels 12 gegenüber dem Kontaktträger 11 um einen Drehpunkt bzw. eine Drehachse 13c. Nachdem der Deckel 12 aus der in Fig. 1 gezeigten Karteneinsetzposition um 90° in seine Schließ- oder Kontaktposition verschwenkt ist, gestatten die Lagervorrichtungen 13a, 13b ferner vorzugsweise eine Verschiebung des Deckels 12 in Fig. 1 nach rechts in eine Verriegelungsposition für den Deckel 12, was in Fig. 2 dargestellt ist. Bei der Verschiebung des Deckels 12 aus der Kontaktposition des Deckels 12 in die Verriegelungsposition des Deckels 12 bleibt die SIM-Karte 1 in ihrer bereits am Ende der Verschwenkbewegung des Deckels 12 um 90° erreichten Kontaktposition mit den Kontaktelementen 6.

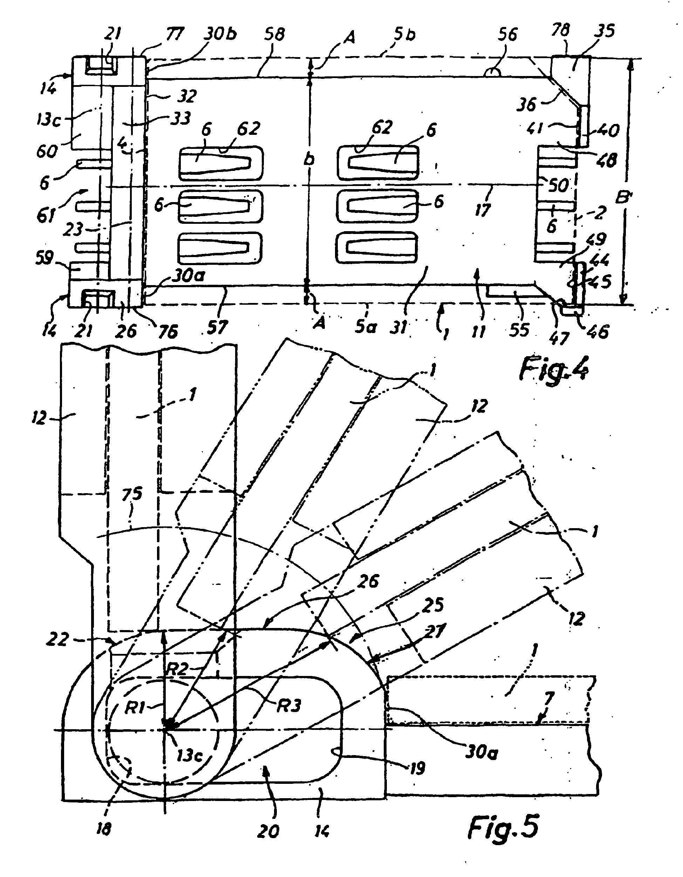

Die Lagervorrichtungen 13a, 13b befinden sich innerhalb der Breite B der SIM-Karte 1, wie man ohne weiteres in Fig. 3 und 4 erkennt. Die Lagervorrichtung 13a weist einen (statischen) Lagerteil (Lagerblock) 14 auf und zwar am Kontaktträger 11 vorzugsweise einstückig mit diesem ausgebildet. Die Lagervorrichtung 13a weist ferner einen (drehbaren) Lagerteil auf. Dieser hat vorzugsweise die Form eines Zapfens 15 am Deckel 12 und ist vorzugsweise einstückig mit diesem ausgebildet. Die Zapfen 15 ragen von am Deckel 12 ausgebildeten Armen 16 senkrecht zur Kartenleserlängsachse 17 nach innen und zwar (im eingesetzten Zustand) in eine im Lagerteil 14 gebildete Ausnehmung 20. Die Ausnehmung 20 (vgl. Fig. 1 und 2) weist zwei Abschnitte auf und zwar eine Drehausnehmung 18 (Fig. 2) und eine Rastausnehmung 19 (Fig. 1). Zwischen diesen beiden Ausnehmungen 18, 19 befindet sich ein kleiner Steg, so daß beim Übergang der Zapfen 15 des Deckels 12 von der Drehausnehmung 18 zur Rastausnehmung 19 und umgekehrt ein geringer Widerstand überwunden werden muß. Zum Einsetzen der Zapfen 15 in die entsprechenden Ausnehmungen 19 in den Lagerteilen 14 sind in diesen vorzugsweise von oben her das Einsetzen der Zapfen 15 erlaubende Durchtrittsöffnungen 21 ausgebildet. Natürlich kann auch statt den ganzen Deckel 12 verschiebbar anzubringen, nur ein Teil des Deckels 12 verschiebbar ausgebildet sein, um die Verriegelung des Deckels 12 in der Kontaktposition der SIM-Karte zu ermöglichen.

Die Steuerkurve oder Steuerfläche 25.

Jeder der Lagerteile 14 weist an seiner Oberseite eine Steuerkurve (Steuer- oder Nockenfläche) 25 auf, die insbesondere eine ebene Fläche 26 und daran anschließend nach links in Fig. 5 eine Schwenkradiusfläche 22 und nach rechts eine Schwenkradiusfläche 27 aufweist. Die Schwenkradiusfläche 27 endet unmittelbar oberhalb von Anlageflächen (oder Anlagekanten) 30a und 30b, die von den Lagerteilen 14 gebildet werden. Diese Anlageflächen 30a, 30b für die Hinterkante 4 bilden zusammen mit mit noch zu beschreibenden Anlagekanten oder -flächen für die Vorderkante 2 und deren Abschrägung 3 eine Kartenaufnahme 7. Die Kartenaufnahme 7 definiert die Kontaktposition für die SIM-Karte.

### Der Kontaktträger 11.

Der Kontaktträger 11 besitzt einen ebenen Plattenteil 31, an dessen in Fig. 4 linker Schmalseite die beabstandeten Lagerblöcke 14 vorgesehen sind. In Ausrichtung mit den Anlageflächen 30a, 30b ist vorzugsweise noch eine Anlagefläche 32 vorgesehen, die von einem einstückig mit dem Plattenteil 31 ausgebildeten Steg 33 gebildet wird. Der Steg 33 ragt gegenüber der Oberseite des Plattenteils 31 etwas nach oben und hat vorzugsweise eine Höhe in etwa in der Größenordnung der Dicke der SIM-Karte 1. Die Höhe des Stegs 33 ist aber vorzugsweise nicht so hoch wie die Höhe der ebenen Fläche 26.

Entgegengesetzt zur Anlagefläche 32 sind weitere, oben bereits erwähnete Anlagenkanten oder Anlageflächen für die SIM-Karte 1 zur Bildung der Kartenaufnahme 7 vorgesehen. Zum einen bildet ein vom Plattenteil 31 nach oben ragender Vorsprung 35 eine schräg verlaufende Aniagefläche 36 für die an der SIM-Karte vorgesehene Abschrägung 3. Ferner bildet ein Steg 40, der senkrecht zur Längsachse 17 des SIM-Kartenlesers 10 verläuft, eine Anlagefläche 41. Mit dem Steg 40 fluchtend aber beabstandet davon und ebenfalls senkrecht zur Längsachse 17 des SIM-Kartenlesers verlaufend ist ein weiterer Steg 44 vorgesehen, der eine Anlagefläche 45 für die Vorderkante 2 der SIM-Karte 1 bildet. Ein weiterer Steg 46 erstreckt sich vorzugsweise ausgehend vom Steg 44 parallel zur Längsachse 17 des SIM-Kartenlesers in Richtung zur Anlagefläche 32 hin, vorzugsweise nur über eine kurze Distanz, und bildet eine seitliche Anlagefläche 47 für einen kleinen Teil der Seitenkante 5a und zwar einem Teil, der benachbart zur Vorderkante 2 liegt. Die Anlagefläche 47 komplettiert die Kartenaufnahme 7.

Vorsprung 35, Stege 40, 44 und 46 sind sozusagen an Zungen 48, 49 des ebenen Plattenteils 31 ausgebildet und bilden dazwischen eine Ausnehmung 50, in die hinein Enden der Kontaktelemente 6 ragen. Die Zungen 48, 49 bilden mit ihren Oberseiten eine Verlängerung der durch die Oberseite des ebenen Plattenteils 31 gebildeten Ebene oder Fläche.

Längsseitenkanten 57, 58 des ebenen Plattenteils 31 sind gegenüber den Seitenflächen 76 bzw. 77 (Fig. 4) der Lagerteile 14 und gegenüber der Seitenfläche 78 des Vorsprungs 35 sowie der Anlagefläche 47 vorzugsweise um den gleichen Abstand A zur Leserlängsachse 17 hin versetzt. Die Breite b des Plattenteils 31 ist also kleiner als die Breite B der Karte 1. Dies schafft Platz für die Unterbringung der Arme 16 sowie der seitlichen Kartenführungsteile des Deckels 12.

Vorzugsweise auf einem höhenmäßig etwas niedrigeren Niveau gegenüber dem Niveau der Oberfläche des ebenenen Plattenteils 31 liegt von der Längsseitenkante 57 wegragend eine Führungsfläche 55 und von der Längsseitenkante 58 wegragend eine Führungszunge 56. Führungsfläche 55 und Führungszunge 56 arbeiten mit komplementär ausgebildeten Flächen am Deckel 12 zusammen, um eine gute Führung bei der Translationsbewegung des Deckels 12 aus der Kontaktstellung des Deckels 12 in die Verriegelungsstellung des Deckels 12 zu erreichen.

Flächenelemente 59 und 60 benachbart zu den Lagerblöcken 14 erhöhen die Stabilität und bilden einen Ausschnitt 61, in den hinein die Anschlüsse, vorzugsweise SMD-Anschlüsse der Kontaktelemente 6 ragen. Im dargestellten Ausführungsbeispiel sind also in bevorzugter Weise drei Kontaktelemente zum Ausschnitt 61 hin herausgeführt und drei Kontaktelemente sind zur Ausnehmung 50 hin herausgeführt. Schließlich sind in der ebenen Platte 31 noch Fenster 62 vorgesehen, die den Durchtritt der Kontaktelemente 6 gestatten.

In der Oberseite des Deckels 12 sind im Bereich der Kontaktenden der Kontaktelemente 6 ovale Öffnungen 63, 64 vorgesehen und zwar bei in Verriegelungsposition befindlichem Deckel 12.

Die Arbeitsweise des erfindungsgemäßen Chipkartenlesers 1.

Vorausgesetzt, daß der Deckel 12 bereits durch die Durchtrittsöffnungen 21 in die Drehausnehmungen 18 mit seinen Zapfen 15 eingesetzt ist und etwa die in Fig. 1 gezeigte Karteneinsetzposition einnimmt, wird die SIM-Karte 1 in einen im Deckel 12 gebildeten Schacht eingesetzt. Der Deckel 12 muß natürlich nicht unbedingt die in Fig. 1 gezeigte Vertikalposition einnehmen, sondern kann bereits eine etwas geneigte Stellung besitzen, beispielsweise die in Fig. 5 gezeigte Mittelstellung. Nach dem Einsetzen der Karte 1 in den Deckel 12 sitzt die Karte 1 mit ihrer hinteren Kante auf den Steuerkurven (oder Nockenfläche) 25 der beiden Lagerteile 14 auf. Der Deckel 12 ist also hinten (oder unten in Fig. 1) nicht geschlossen, sondern bildet wegen der Arme 16 eine Art Aussparung 28 im Deckel 12.

Nachdem die SIM-Karte 1 in den Deckel 12 eingesetzt ist, wird dieser, wie in Fig. 5 gezeigt, verschwenkt, wobei die Karte 1 mit ihrer in Fig. 5 unteren Hinterkante 4 auf der Steuerkurve 25 entlang läuft, um über die ebene Fläche 26 zur Schwenkradiusfläche 27 zu gelangen, um dann von letzterer mit der Hinterkante 4 benachbart zur Anlagefläche 30a in der Aufnahme 7 angeordnet zu werden. Diese dann erreichte Position kann als die Kontaktposition bezeichnet werden, denn in dieser Kontaktposition befinden sich die SIM-Kartenkontakte ausgerichtet mit dem Kontaktfeld der Kontaktelemente 6 im Kontaktträger 11. Die . SIM-Karte 1 ist in dieser Kontaktposition durch die Kartenaufnahme 7, d. h. die erwähnten Anlageflächen 30a, 30b, 32, 36, 41, 45 und 47 gehalten. Als nächstes wird dann der Deckel 12 aus der Kontaktposition in die in Fig. 2 gezeigte Deckel-Verriegelungsposition verschoben. Die Karte 1 ist natürlich in sowohl der Kontaktposition des Deckels wie auch der Verriegelungsposition des Deckels jeweils in dergleichen Position nämlich der Kontaktposition der SIM-Karte 1 mit den Kontaktelementen 6.

In der Verriegelungsposition des Deckels 1 liegt ein Zungenteil 70 des Deckels 12 unter einer vom Steg gebildeten Anlagefläche 73. Diametral bezüglich der Längsachse des SIM-Kartenlesers 17 läuft ferner in der Verriegelungsposition das in Fig. 3 nicht mehr zu sehende vordere Ende eines Stegteils 74 des Deckels 12 unter eine vom Vorsprung 35 gebildete Anlagefläche.

Man erkennt, daß erfindungsgemäß die Lagervorrichtungen 13a, 13b, insbesondere die stationären Lagerblöcke oder Lagerteile 14 innerhalb der Breite B der eingesetzten SIM-Karte 1 angeordnet sind. Die Lagerblöcke 14 sind gegenüber der Anlagefläche 32 nach links in Fig. 3 versetzt. Die Verriegelungsposition des Deckels 12 ist in Fig. 3 und 4 durch die strichpunktierte Linie 23 gekennzeichnet und liegt unmittelbar benachbart aber in Fig. 3 und 4 nach links versetzt gegenüber der Anlagekante 32, während die die Drehachse 13 veranschaulichende strichpunktierte Linie nochmals weiter nach links versetzt gegenüber der Verriegelungsposition 23 der Lagerzapfen 15 vorgesehen ist. Durch die Steuerkurve 25 wird sichergestellt, daß trotz dieser Anordnung eine sichere Überführung der eine Relativbewegung gegenüber dem Deckel 12 ausführenden Karte 1 beim Übergang von der Einsetzposition in die Kontaktposition erreicht wird. Dies ist im einzelnen in Fig. 5 veranschaulicht. Die Karte 1 kann beim Einsetzen auf die Steuerkurve 25 an der Stelle auftreffen, wo der Pfeil R1 endet. Bei Bewegung in. die Mittelposition läuft die Karte entlang der ebenen Fläche 26 beispielweise zu der mit R2 gekennzeichneten Position. Da R2 > R1, ergibt sich eine Relativbewegung für die Karte 1. Der Pfeil R3 deutet an, daß sich beim weiteren Verschwenken des Deckels 12 eine weitere Relativverschiebung für die Karte 1 ergibt, bis schließlich die Karte 1 in die Kartenaufnahme 7 gelangt. Ohne die erfindungsgemäße Steuerkurve müßte ein durch den Kreisbogen 75 in Fig. 5 angedeuteter Nocken- oder Kurvenverlauf vorgesehen sein, der aber eine große Bauhöhe zur Folge hätte.

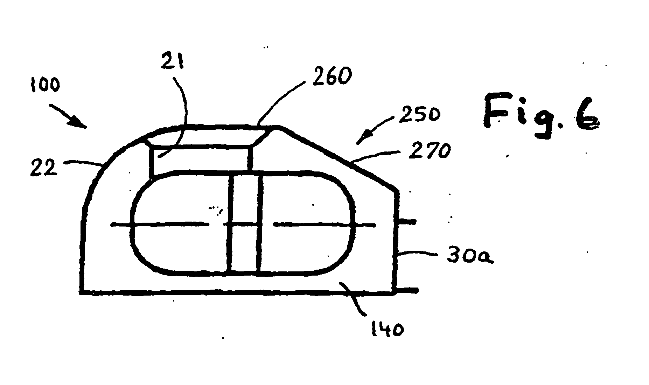

Fig. 6 zeigt ein weiteres bevorzugtes Ausführungsbeispiel eines SIM-Kartenlesers 100 in einer Ansicht ähnlich der sich auf den SIM-Kartenleser 1 beziehenden Darstellung der Fig. Fig. 5. In Fig. 6 ist vom SIM-Kartenleser 100 nur der dem Lagerteil 14 in Fig. 5 entsprechende Lagerteil 140 dargestellt. Der Lagerteil 140 unterscheidet sich vom Lagerteil 14 dadurch, daß die Steuerkurve 250 des Lagerteils 140 abgewandelt ist. Allgemein gesprochen ist der Schwenkradius 27 des Lagerteils 14 durch eine schräge Fläche 270 ersetzt. Im einzelnen ist bei der Steuerkurve 250 gemäß dem Ausführungsbeispiel der Fig. 6 die der ebenen Fläche 26 der Fig. 5 entsprechende Fläche 260 verkürzt und endet in etwa (rechts in Fig. 6) benachbart zur Durchtrittsöffnung 21, um dann im wesentlichen unmittelbar in die Schrägfläche 270 überzugehen. Die Schrägfläche 270 verläuft also ausgehend von der ebenen Fläche 260 schräg nach unten zum oberen Ende der Anlagefläche 30a hin. Die Schrägfläche 270 ist vorzugsweise eben ausgebildet und natürlich an den beiden Lagerteilen 140 vorgesehen. Die Schwenkradiusfläche 22 ist bei Fig. 6 sowie in Fig. 5 vorgesehen.
Gemäß ihres Hauptanspruchs bezieht sich die Erfindung auf einen Smart- oder SIM-Kartenleser mit einem Kontaktelemente aufweisenden Kontaktträger, wobei die Lagerstelle am Kontakt-träger innerhalb des Umrisses der im Smart-oder SIM-Karten-leser eingesetzten Smart- oder SIM-Karte liegt.
Es sei bemerkt, daß die Ziele und Vorteile der Erfindung erreicht werden können durch jegliche Verbesserungen, Veränderungen und Modifikationen, die durch die nachfolgende Zusammenfassung der Erfindung und die Ansprüche abgedeckt werden.

### Zusammenfassung der Erfindung in folgenden Punkten

1. SIM-Kartenleser
   mit einem Kontaktelemente (6) aufweisenden Kontaktträger (11),
   mit einem Deckel (12) zur Aufnahme einer zwei beabstandete Längsseitenkanten (5a, 5b) und zwei beabstandete Vorder- und Hinterkanten (2, 4) aufweisenden SIM-Karte (1),
   mit vorzugsweise zwei Lagervorrichtungen (13a, 13b) an Kontaktträger und Deckel zur Ermöglichung einer Schwenkbewegung zwischen Deckel und Kontaktträger, wobei jede der Lagervorrichtungen eine Lagerstelle bzw. eine Lagerteil (14) am Kontaktträger (11) und ein Lagerteil bzw. eine Lagerstelle am Deckel (12) aufweist, und
   wobei ferner vorzugsweise die Lagerstelle am Kontaktträger innerhalb des Umrisses der im SIM-Kartenleser eingesetzten SIM-Karte liegt.
2. SIM-Kartenleser mit einem Kontaktträger (11) und einem schwenkbar angeordneten Deckel (12), wobei die Lagerung für den Deckel (12) am Kontaktträger (11) derart vorgesehen ist, daß die Breite des SIM-Kartenlesers die Breite B der SIM-Karte nicht übersteigt.
3. SIM-Kartenleser
   wobei die Lagerstelle bzw. der Lagerteil (14) am Kontaktträger mit einer Steuerkurve (25) derart versehen ist, daß die Karte (1) beim Schließen des Deckels (12) in eine Kartenaufnahme eingeschwenkt wird.
4. SIM-Kartenleser
   wobei der Deckel (12) für eine Schwenkoder Klappbewegung sowie eine Verschiebebewegung am Kontaktträger (11) gelagert ist.
5. SIM-Kartenleser
   wobei der Deckel aus einer Kartenaufnahmeposition in eine Kartenkontaktposition mit den Kontaktelemen-ten (6) verschwenkbar ist, worauf dann der Deckel selbst oder ein am Deckel angeordnetes Bauteil in eine Position bewegt werden kann, in der die SIM-Karte in ihrer Kontaktposition gehalten und der Deckel verriegelt ist.
6. SIM-Kartenleser
   wobei die innerhalb der Kartenbreite liegenden Lagerstellen für den Klapp-Schiebedeckel durch Verwendung einer Steuerkurve sicherstellen, daß die Kartenkontakte auf die Kontaktfeldmitte der Kontaktelemente (6) auftreffen, dadurch, daß beim Zuklappen des Deckels (12) dieser zwangsgeführt ist, wobei die Karte eine Relativbewegung zum Deckel ausführt und so in einer Kartenaufnahme gebildet vorzugsweise durch Anlageflächen im Kontaktträger angeordnet wird.
7. SIM-Kartenleser
   wobei die Lagerstellen bzw. Lagerteile zur Begrenzung der Bauhöhe des SIM-Kartenlesers abgeflacht ausgebildet sind und an ihrer Oberseite eine im wesentlichen ebene Fläche (26) aufweisen, die zur Kartenaufnahme hin in eine Schwenkradiusfläche (27) übergeht.
8. SIM-Kartenleser
   wobei die Kartenaufnahme am Kontaktträger (11) durch Anlageflächen (30a, 30b, 36, 41, 45, 47) gebildet ist.
9. SIM-Kartenleser
   wobei die Lagerteile oder Lagerblöcke (14) von oben her zugängliche Durchtrittsöffnungen (21) aufweisen, um das Einsetzen der insbesondere als Zapfen (15) ausgebildeten Lagerteile des Deckels (12) zu gestatten.
10. SIM-Kartenleser
   wobei die Breite des SIM-Kartenlesers im Bereich der Lagerteile (14) und im Bereich der Vorderkante der eingesetzten SIM-Karte (1) in etwa der Breite B der SIM-Karte entsprechen, während der Kontaktträger (11) mit dem dazwischen verlaufenden ebenen Plattenteil (31) eine geringere Breite mindestens in der Weise besitzt, daß die zur Kartenaufnahme vorhandenen seitlichen Teile des Deckels in diesen Aussparungen bei geschlossenem Deckel zu liegen kommen, so daß der Deckel keine signifikante Verbreiterung des SIM-Kartenlesers über die Breite der SIM-Karte selbst hinaus wirkt.
11. SIM-Kartenleser
   wobei der Deckel nach dem Verschwenken in der Kontaktposition des SIM-Karte durch zusätzliche am Deckel vorgesehene Mittel in dieser Position verriegelbar ist.
12. SIM-Kartenleser
   wobei die Steuerkurve bzw. Steuerkurvenfläche (25) auf der Oberseite der Lagerteile (14) vorgesehen ist und ein im wesentlichen ebene Fläche (26) sowie anschließend an die ebene Fläche (26) vorzugsweise beidseitig eine Schwenkradiusfläche (27 bzw. 22) aufweist, wobei eine Kartenaufnahme (7) vom Kontaktträger gebildet ist und vorzugsweise Anlageflächen umfaßt.
13. SIM-Kartenleser
   wobei die SIM-Karte (1) in ihrer Kontaktposition im wesentlichen durch an der Vorderkante (2) zu der Schräge (3) sowie der Hinterkante (4) vorgesehene Anlageflächen am Kontaktträger (11) erhalten ist.
14. SIM-Kartenleser
   wobei eine seitliche Anlagefläche (47) benachbart zur Vorderkante (2) vorgesehen ist.
15. SIM-Kartenleser
   wobei in der Nähe der Vorderkante seitlich von dem ebenen Plattenteil (31) wegragende Führungsflächen (55) bzw. Führungszungen (56) vorgesehen sind, wobei im Bereich der Vorderkante am ebenen Plattenteil (31) insbesondere an Zungen (48, 49) desselben Verriegelungsmittel vorgesehen sind, die mit Verriegelungsmitteln (70) am Deckel (12) zusammenarbeiten.
16. SIM-Kartenleser
   wobei im Bereich der Vorderkante einer in der Kartenaufnahme sitzenden Karte ein Vorsprung (35), ein Steg (40) sowie ein weiterer Steg (44) und ein zu letzterem senkrecht verlaufender Steg (46) vorgesehen sind, die jeweils mit Anlageflächen für die Karte ausgestattet sind.
17. SIM-Kartenleser
   dadurch gekennzeichnet, daß in der Oberseite des Deckels (12) ovale Öffnungen (63, 64) vorgesehen sind, die den Einblick auf das Kontaktfeld der Kontaktelemente (6) gestattet, wenn keine SIM-Karte eingesetzt ist.
18. SIM-Kartenleser
   wobei die Steuerkurve (250) auf der Oberseite jedes der Lagerblöcke (140) vorzugsweise eine im wesentlichen ebene Fläche (260) aufweist, die sich zum oberen Ende der Anlagekante (30a) hin in einer Schrägfläche (270) fortsetzt.
19. SIM-Kartenleser wobei die Schrägflache (270) eben ausgebildet ist.
20. SIM-Kartenleser
   wobei die ebene Fläche (260) im Bereich der Durchtrittsöffnung (21) vorgesehen ist.
21. SIM-Kartenleser
   wobei die ebene Fläche (260) eine Länge besitzt, die in etwa dem halben Durchmesser der Durchtrittsöffnung (21) entspricht.
22. SIM-Kartenleser
   wobei sich entgegengesetzt zur Schrägfläche (270) an die ebene Fläche (260) eine Schwenkradiusfläche (22) anschließt.

## Patentansprüche

1. SIM-Kartenleser
nit einem Kontaktelemente (6) aufweisenden Kontaktträger (11) ,
mit einem Deckel (12) zur Aufnahme einer zwei beabstandete Längsseitenkanten (5a, 5b) und zwei beabstandete Vorder- und Hinterkanten (2, 4) aufweisenden SIM-Karte (1),
mit zwei Lagervorrichtungen (13a, 13b) an Kontaktträger und Deckel zur Ermöglichung einer Schwenkbewegung zwischen Deckel und Kontaktträger, wobei jede der Lagervorrichtungen (13a, 13b) einen statischen Lagerteil (14, 140) am Kontaktträger (11) und
einen drehbaren Lagerteil (15) am Deckel (12) aufweist,
wobei ferner beide Lagervorrichtungen (13a, 13b) innerhalb der Kartenbreite (B) der im SIM-Kartenleser einsetzbaren SIM-Karte liegen und wobei ein statischer Lagerteil (14, 140) am Kontaktträger mit einer Steuerkurve (25, 250) derart versehen ist, daß die Karte (1) beim Schließen des Deckels (12) in eine Kartenaufnahme eingeschwenkt wird.

2. SIM-Kartenleser nach Anspruch 1, wobei der Deckel (12) für eine Schwenkbewegung sowie eine Verschiebebewegung am Kontaktträger (11) gelagert ist.

3. SIM-Kartenleser nach einem der Ansprüche 1 oder 2, wobei der Deckel aus einer Kartenaufnahmeposition in eine Kartenkontaktposition mit den Kontaktelementen (6) verschwenkbar ist, worauf dann der Deckel selbst oder ein am Deckel angeordnetes Bauteil in eine Position bewegt werden kann, in der die SIM-Karte in ihrer Kontaktposition gehalten und der Deckel verriegelt ist.

4. SIM-Kartenleser nach einem der vorhergehenden Ansprüche, wobei die innerhalb der Kartenbreite liegenden Lagervorrichtungen (13a, 13b) für den Deckel durch Verwendung einer Steuerkurve (25) sicherstellen, daß die Kartenkontakte auf die Kontaktfeldmitte der Kontaktelemente (6) auftreffen, dadurch, daß beim Zuschwenken des Deckels (12) die Karte wegen der Steuerkurve zwangsgeführt eine Relativbewegung zum Deckel ausführt und so in einer Kartenaufnahme im Kontaktträger angeordnet wird.

5. SIM-Kartenleser nach einem der vorhergehenden Ansprüche, wobei die Lagerteile zur Begrenzung der Bauhöhe des SIM-Kartenlesers abgeflacht ausgebildet sind und an ihrer Oberseite eine im wesentlichen ebene Fläche (26) aufweisen, die zur Kartenaufnahme hin in eine Schwenkradiusfläche (27) übergeht.

6. SIM-Kartenleser nach Anspruch 4 oder 5, wobei die Kartenaufnahme am Kontaktträger (11) durch Anlageflächen (30a, 30b, 36, 41, 45, 47) gebildet ist.

7. SIM-Kartenleser nach einem der Ansprüche 1-6, wobei die Lagerteile (14, 140) von oben her zugängliche Durchtrittsöffnungen (21) aufweisen, um das Einsetzen der insbesondere als Zapfen (15) ausgebildeten Lagerteile des Deckels (12) zu gestatten.

8. SIM-Kartenleser nach einem der vorhergehenden Ansprüche, wobei die Breite des SIM-Kartenlesers im Bereich der Lagerteile (14) und im Bereich der Vorderkante der eingesetzten SIM-Karte (1) in etwa der Breite B der SIM-Karte entsprechen, während der Kontaktträger (11) mit dem dazwischen verlaufenden ebenen Plattenteil (31) eine geringere Breite mindestens in der Weise besitzt, daß die zur Kartenaufnahme vorhandenen seitlichen Teile des Deckels in diesen Aussparungen bei geschlossenem Deckel zu liegen kommen, so daß der Deckel keine signifikante Verbreiterung des SIM-Kartenlesers über die Breite der SIM-Karte selbst hinaus wirkt.

9. SIM-Kartenleser nach einem der vorhergehenden Ansprüche, wobei der Deckel nach dem Verschwenken in die Kontaktposition der SIM-Karte durch zusätzliche am Deckel vorgesehene Mittel in dieser Position verriegelbar ist.

10. SIM-Kartenleser nach einem der Ansprüche 1-9, wobei die Steuerkurve bzw. Steuerkurvenfläche (25) auf der Oberseite der Lagerteile (14) vorgesehen ist und eine im wesentlichen ebene Fläche (26) sowie anschließend an die ebene Fläche (26) vorzugsweise beidseitig eine Schwenkradiusfläche (27 bzw. 22) aufweist, wobei eine Kartenaufnahme (7) vom Kontaktträger gebildet ist und vorzugsweise Anlageflächen umfaßt.

11. SIM-Kartenleser nach einem der vorhergehenden Ansprüche, wobei die SIM-Karte (1) in ihrer Kontaktposition im wesentlichen durch an der Vorderkante (2), der Schräge (3), sowie der Hinterkante (4) durch Anlageflächen ((30a, 30b, 32, 36, 41, 45) des Kontaktträgers (11) gehalten ist.

12. SIM-Kartenleser nach einem der vorhergehenden Ansprüche, wobei eine seitliche Anlagefläche (47) benachbart zur Vorderkante (2) vorgesehen ist.

13. SIM-Kartenleser nach einem der vorhergehenden Ansprüche, wobei in der Nähe der Vorderkante seitlich von dem ebenen Plattenteil (31) wegragende Führungsflächen (55) bzw. Führungszungen (56) vorgesehen sind, wobei im Bereich der Vorderkante am ebenen Plattenteil (31) insbesondere an Zungen (48, 49) desselben Verriegelungsmittel vorgesehen sind, die mit Verriegelungsmitteln (70) am Deckel (12) zusammenarbeiten.

14. SIM-Kartenleser nach einem der vorhergehenden Ansprüche, wobei im Bereich der Vorderkante einer in der Kartenaufnahme sitzenden Karte ein Vorsprung (35), ein Steg (40) sowie ein weiterer Steg (44) und ein zu letzterem senkrecht verlaufender Steg (46) vorgesehen sind, die jeweils mit Anlageflächen für die Karte ausgestattet sind.

15. SIM-Kartenleser nach einem der vorhergehenden Ansprüche, **dadurch gekennzeichnet, daß** in der Oberseite des Deckels (12) Öffnungen (63, 64) vorgesehen sind, die den Einblick auf das Kontaktfeld der Kontaktelemente (6) gestattet, wenn keine SIM-Karte eingesetzt ist.

16. SIM-Kartenleser nach einem der Ansprüche 1-15, wobei die Steuerkurve (250) auf der Oberseite jedes der Lagerteile (140) vorzugsweise eine im wesentlichen ebene Fläche (260) aufweist, die sich zum oberen Ende der Anlagekante (30a) hin in einer Schragfläche (270) fortsetzt.

17. SIM-Kartenleser nach Anspruch 16, wobei die Schrägfläche (270) eben ausgebildet ist.

18. SIM-Kartenleser nach einem der Ansprüche 16 oder 17, wobei die ebene Fläche (260) im Bereich der Durchtrittsöffnung (21) vorgesehen ist.

19. SIM-Kartenleser nach einem der Ansprüche 16-18, wobei die ebene Fläche (260) eine Länge besitzt, die in etwa dem halben Durchmesser der Durchtrittsöffnung (21) entspricht.

20. SIM-Kartenleser nach einem der Ansprüche 18-19, wobei sich entgegengesetzt zur Schrägfläche (270) an die ebene Fläche (260) eine Schwenkradiusfläche (22) anschließt.

21. SIM-Kartenleser nach einem der vorhergehenden Ansprüche, wobei der drehbare Lagerteil (15) einstückig mit dem Deckel ausgebildet ist.

22. SIM-Kartenleser nach einem der vorhergehenden Ansprüche, wobei der statische Lagerteil (14) eine Ausnehmung (18) die eine Drehausnehmung (18) und eine Rastausnehmung (19) aufweist, besitzt.

23. SIM-Kartenleser nach einem der vorhergehenden Ansprüche, wobei mit den Deckel (12) Kartenführungsteile, drehbare Lagerteile (15) und Verriegelungsmittel (70) einstückig hergestellt sind.

24. SIM-Kartenleser nach einem der vorhergehenden Ansprüche, wobei mit dem Kontaktträger (11) der statische Lagerteil (14), Verriegelungsmittel (Zungen 49) und Anlageflächen (30a, 30b, 32, 26, 41, 45) einstückig hergestellt sind.

25. SIM-Kartenleser nach einem der vorhergehenden Ansprüche, wobei der Kontaktträger eine Führungsfläche (55) und eine Führungszunge (56) bildet, die mit komplementär ausgebildeten Flächen am Deckel zusammenarbriten.

26. SIM-Kartenleser nach einem der vorhergehenden Ansprüche, wobei die beiden Lagervorrichtungen (13a, 13b) mit Abstand voneinander und benachbart zu Seitenflächen (76, 77) gebildet vom Kontaktträger (11) angeordnet sind.

## Claims

1. A SIM-card reader comprising
a contact support (11) adapted to support contact elements (6), a cover (12) adapted to receive a SIM-card (1) having two spaced longitudinal side edges (5a, 5b) and two spaced front and rear edges (2, 4), two bearing means (13a, 13b) provided at the contact support and the cover so as to enable a pivotal movement between said cover and said contact support, wherein each of said bearing means (13a, 13b) comprises a stationary bearing part (14, 140) at the contact support (11) and a rotary bearing part (15) at the cover (12),
wherein further both said bearing means (13a, 13b) are located within the card width (B) of the SIM-card insertable into the SIM-card reader and wherein one static bearing part (14, 140) at the contact support is provided with a control curve (25, 250) such that the card (1) is pivoted into a card receiving means when closing the cover (12).

2. SIM-card reader according to claim 1, wherein the cover (12) is supported by the contact support (11) for a pivotal movement as well as for a translatory movement.

3. SIM-card reader according to claims 1 or 2 wherein the cover is mounted for a pivotal movement from a card-receiving position into a card contact position contacting the contact elements (6), whereupon the cover itself or a component mounted on the cover can be moved into a position in which the SIM-card is held in its contact position and the cover is locked.

4. SIM-card reader according to one of the preceding claims, wherein the bearing means (13a, 13b) for the cover located within the card width assure that the card contacts touch the center of the contact elements (6), because the card is positively guided during the closing pivotal movement of the cover (12) carries out a relative movement with respect to the cover and the card is thus located in a card-receiving means of the contact support.

5. SIM-card reader of one or more of the preceding claims, wherein the bearing parts are flattened so as to limit the thickness of the SIM-card reader, and wherein the bearing parts comprise at their upper surface an essentially planar surface (26) which continues in the direction towards the card-receiving means as a pivot radius surface (27).

6. SIM-card reader according to claim 4 or 5, wherein the card-receiving means is formed at the contact support (11) by abutment surfaces (30a, 30b, 36, 41, 45, 47).

7. SIM-card reader according to one of claims 1 - 6, wherein the bearing parts (14, 140) comprise passage openings (21) so as to allow the insertion of the bearing parts of the cover (12), said bearing parts preferably having the form of pins (15).

8. SIM-card reader in accordance with one of the preceding claims, wherein the width of the SIM-card reader corresponds, in the area of the bearing parts (14) and in the area of the front edge of the inserted SIM-card (1), in substance to the width (B) of the SIM-card,
while the contact support (11) with a planar plate portion (31) extending therebetween has a smaller width, at least such that the lateral portions or parts of the cover, which are present for receiving the card, are located in the recesses defined in this manner, when the cover is closed so that the cover does not cause a significant broadening of the SIM-card reader beyond the width of the SIM-card itself.

9. SIM-card reader according to one of the preceding claims, wherein the cover, after being pivoted into the contact position of the SIM-card, can be locked in said contact position by additional means provided at the cover.

10. SIM-card reader according to one of claims 1 - 9 wherein the control curve or control curve surface (25) is provided on the upper surface of the bearing parts (14) and comprises an in substance planar surface (26), wherein adjacent to said planar surface (26), preferably on both sides, a pivot radius surface (27 and 22, respectively) is provided, wherein a card-receiving means (7) is defined by the contact support and preferably comprises abutment surfaces.

11. SIM-card reader according to one of the preceding claims, wherein the SIM-card (1) is held in its contact position in substance by its front-edge (2), the inclination (3), as well as at the rear edge (4) by means of abutment surfaces (30a, 30b, 32, 26, 41, 45) of the contact support (11).

12. SIM-card reader according to one of the preceding claims, wherein a lateral abutment surface (27) is provided adjacent to the front-edge (2).

13. SIM-card reader according to one of the preceding claims, wherein in the vicinity of the front edge laterally offset from the planar plate portion (31) projecting guide surfaces (55) and guide tongues (56), respectively, are provided, and wherein the area of the front edge, at the planar plate part (31), locking means, preferably at tongues (48, 49), are provided, said locking means co-operate with locking means (70) provided at the cover.

14. SIM-card reader according to one of the preceding claims, wherein in the area of the front edge of a card located in the card-receiving means a projection (35), a rib (40) as well as another rib (44) and a further rib (46), extending laterally with respect to the latter rib (44), are provided each of which comprising abutment surfaces for the card.

15. SIM-card reader according to one of the preceding claims, **characterized in that** in the upper side of the cover (12) openings (63, 64) are provided which allow viewing the contact field of the contact elements (6) as long as no SIM-card is inserted.

16. SIM-card reader according to one of claims 1 through 15, wherein the control curve (250) at the upper side of each of said bearing parts (140) preferably comprises a substantially planar surface (260) which continues towards the upper end of the abutment edge (30a) in an inclined surface (270).

17. SIM-card reader according to claim 16, wherein the inclined surface (270) is planar.

18. SIM-card reader according to claim 16 or 17, wherein the planar surface (260) is provided in the area of the passage opening (21).

19. SIM-card reader according to one of claims 16 through 18, wherein planar surface (260) has a length corresponding in substance to one half of the diameter of the passage opening (21).

20. SIM-card reader according to one of claims 18 - 19 wherein opposite to the inclined surface (270) a pivot radius surface (22) is provided adjacent to a planar surface (260).

21. SIM-card reader according to one of the preceding claims, wherein the rotary bearing part (15) is formed integrally with the cover.

22. SIM-card reader according to one of the preceding claims, wherein in the stationary bearing part (14) comprises a recess (18) having a rotational recess (18) and a locking recess (19).

23. SIM-card reader according to one of the preceding claims, wherein card guide portions, rotary bearing parts (15), and locking means (70) are integrally formed together with the cover (12).

24. SIM-card reader according to one of the preceding claims, wherein together with the contact support (11), the stationary bearing part (14), locking means (tongues) (49) and abutment surfaces (30a, 30b, 32, 36, 41, 45) are integrally formed.

25. SIM-card reader according to one of the preceding claims, wherein the contact support forms a guide surface (55) and a guide tongue (56) which cooperate with complementary formed surfaces at the cover.

26. SIM-card reader according to one of the preceding claims, wherein both bearing means (13a, 13b) are spaced from each other and are located adjacent to the side surfaces (76, 77) formed by the contact support (11).

## Revendications

1. Lecteur de cartes SIM comportant
un support de contacts (11) apte à supporter des éléments de contact (6), un couvercle (12) pour recevoir une carte SIM (1) ayant deux bords longitudinaux espacés (5a, 5b) et deux bords avant et arrière espacés (2, 4), deux dispositifs à palier (13a, 13b) situés sur le support de contacts et le couvercle pour rendre possible un mouvement de pivotement entre le couvercle et le support de contacts, dans lequel chacun des dispositifs à palier (13a, 13b) présente une partie de palier fixe (14, 140) située sur le support de contacts (11) et une partie de palier mobile (15) située sur le couvercle (12),
et dans lequel en outre les deux dispositifs à palier (13a, 13b) se trouvent dans un espace correspondant à la largeur (B) de la carte SIM pouvant être insérée dans le lecteur de cartes SIM et dans lequel une partie de palier fixe (14, 140) située sur le support de contacts comporte une came de commande (25, 250), de sorte que la carte (1) pivote dans un réceptacle de carte lors de la fermeture du couvercle (12).

2. Lecteur de cartes SIM selon la revendication 1, dans lequel le couvercle (12) est supporté par le support de contacts (11) en vue d'un mouvement de rotation et d'un mouvement de translation.

3. Lecteur de cartes SIM selon la revendication 1 ou 2, dans lequel le couvercle peut pivoter d'une position de réception de carte à une position de contact de carte avec les éléments de contact (6), le couvercle lui-même ou une partie associée au couvercle pouvant ensuite être déplacé dans une position dans laquelle la carte SIM est maintenue dans sa position de contact et le couvercle est verrouillé.

4. Lecteur de cartes SIM selon l'une quelconque des revendications précédentes, dans lequel les dispositifs à palier (13a, 13b) du couvercle se trouvant dans un espace correspondant à la largeur de la carte garantissent que les contacts de carte rencontrent les zones médianes des éléments de contact (6), puisque la carte est guidée positivement lors du mouvement pivotant de fermeture du couvercle (12) et présente un mouvement relatif par rapport au couvercle et la carte est ainsi placée dans un réceptacle de carte du support de contacts.

5. Lecteur de cartes SIM selon l'une quelconque des revendications précédentes, dans lequel les parties de palier sont aplaties pour limiter l'épaisseur du lecteur de carte SIM et présentent, à leur surface supérieure, une surface sensiblement plane (26) se prolongeant en une surface courbe (27) vers le réceptacle de carte.

6. Lecteur de cartes SIM selon la revendication 4 ou 5, dans lequel le réceptacle de carte situé sur le support de contacts (11) est réalisé par des surfaces de positionnement (30a, 30b, 36, 41, 45, 47).

7. Lecteur de cartes SIM selon l'une des revendications 1 à 6, dans lequel les parties de palier (14, 140) comportent des ouvertures d'admission (21) pour permettre l'insertion des parties de palier du couvercle (12), réalisées en particulier sous forme de pivots (15).

8. Lecteur de cartes SIM selon l'une quelconque des revendications précédentes, dans lequel la largeur du lecteur de cartes SIM au niveau des parties de palier (14) et au niveau du bord avant de la carte SIM (1) insérée correspond sensiblement à la largeur (B) de la carte SIM,
tandis que le support de contacts (11) comportant la partie de plateau plane (31) intermédiaire présente une largeur réduite au moins de telle façon que les parties latérales du couvercle présentes pour la réception de carte viennent reposer dans ces évidements lorsque le couvercle est fermé, de façon que le couvercle ne présente aucun élargissement significatif du lecteur de cartes SIM par rapport à la largeur de la carte SIM.

9. Lecteur de cartes SIM selon l'une quelconque des revendications précédentes, dans lequel le couvercle peut être verrouillé en position après pivotement dans la position de contact de la carte SIM, à l'aide de moyens additionnels prévus sur le couvercle.

10. Lecteur de cartes SIM selon l'une des revendications 1 à 9, dans lequel la came de commande ou la surface de la came de commande (25) est prévue sur la partie supérieure des parties de palier (14) et présente une surface sensiblement plane (26) ainsi qu'une surface arrondie de pivotement (27, respectivement 22) située à la suite la surface plane (26) et de préférence des deux côtés, et dans lequel un réceptacle de carte (7) est formé par le support de contacts et comporte de préférence des surfaces de positionnement.

11. Lecteur de cartes SIM selon l'une quelconque des revendications précédentes, dans lequel la carte SIM (1) est pour l'essentiel maintenue dans sa position de contact au niveau du bord avant (2), du biseau (3) et du bord arrière (4) par des surfaces de positionnement (30a, 30b, 32, 26, 41, 45) du support de contacts (11).

12. Lecteur de cartes SIM selon l'une quelconque des revendications précédentes, dans lequel une surface de positionnement latérale (27) est prévue à proximité du bord avant (2).

13. Lecteur de cartes SIM selon l'une quelconque des revendications précédentes, dans lequel, à proximité du bord avant, latéralement par rapport à la partie de plateau plane (31), sont prévues des surfaces de guidage (55) et des languettes de guidage (56), respectivement, et dans lequel, au niveau du bord avant, des moyens de verrouillage sont prévus sur la partie de plateau plane (31), en particulier sur des languettes (48, 49), ces moyens de verrouillage coopérant avec des moyens de verrouillage (70) situés sur le couvercle.

14. Lecteur de cartes SIM selon l'une quelconque des revendications précédentes, dans lequel, au niveau du bord avant d'une carte disposée dans le réceptacle de carte, sont prévus, équipés de surfaces de positionnement pour la carte, une partie en saillie (35), un épaulement (40), un autre épaulement (44) et un épaulement (46) perpendiculaire à ce dernier (44).

15. Lecteur de cartes SIM selon l'une quelconque des revendications précédentes, **caractérisé en ce que**, sur la face supérieure du couvercle (12), sont prévues des ouvertures (63, 64) permettant de voir la zone de contact des éléments de contact (6) quand aucune carte SIM n'est insérée.

16. Lecteur de cartes SIM selon l'une des revendications 1 à 15, dans lequel la came de commande (250) située sur le côté supérieur de chaque partie de palier (140) présente de préférence une surface sensiblement plane (260) se prolongeant en une surface oblique (270) vers l'extrémité supérieure du bord de positionnement (30a).

17. Lecteur de cartes SIM selon la revendication 16, dans lequel la surface oblique (270) est plane.

18. Lecteur de cartes SIM selon la revendication 16 ou 17, dans lequel la surface plane (260) est prévue au niveau de l'ouverture d'admission (21).

19. Lecteur de cartes SIM selon l'une des revendications 16 à 18, dans lequel la surface plane (260) présente une longueur qui correspond sensiblement à la moitié du diamètre de l'ouverture d'admission (21).

20. Lecteur de cartes SIM selon l'une des revendications 18 à 19, dans lequel une surface arrondie de pivotement (22) fait suite à la surface plane (260) du côté opposé à la surface inclinée (270).

21. Lecteur de cartes SIM selon l'une quelconque des revendications précédentes, dans lequel la partie de palier mobile (15) est réalisée d'une seule pièce avec le couvercle.

22. Lecteur de cartes SIM selon l'une quelconque des revendications précédentes, dans lequel la partie de palier fixe (14) comporte un évidement (18) comprenant un évidement de pivotement (18) et un évidement d'arrêt (19).

23. Lecteur de cartes SIM selon l'une quelconque des revendications précédentes, dans lequel les parties de guidage de la carte, les parties de paliers mobiles (15) et les moyens de verrouillage (70) sont réalisés d'une seule pièce avec le couvercle (12).

24. Lecteur de cartes SIM selon l'une quelconque des revendications précédentes, dans lequel la partie de palier fixe (14), les moyens de verrouillage (languettes) (49) et les surfaces de positionnement (30a, 30b, 32, 36, 41, 45) sont réalisés d'une seule pièce avec le support de contacts (11).

25. Lecteur de cartes SIM selon l'une quelconque des revendications précédentes, dans lequel le support de contacts présente une surface de guidage (55) et une languette de guidage (56), qui coopèrent avec des surfaces complémentaires situées sur le couvercle.

26. Lecteur de cartes SIM selon l'une quelconque des revendications précédentes, dans lequel les deux dispositifs à palier (13a, 13b) sont disposés à distance l'un de l'autre et à proximité des surfaces latérales (76, 77) formées par le support de contacts (11).
